# EUROPÄISCHE PATENTSCHRIFT

(11) **EP 1 962 075 B1**
(45) Veröffentlichungstag und Bekanntmachung des Hinweises auf die Patenterteilung: **17.04.2013**
(21) Anmeldenummer: 08101848.3
(22) Anmeldetag: 21.02.2008
(51) Int. Cl.: G01L 19/14

(54) **Drucksensorverbindung**
Pressure sensor connexion
Connection d'un capteur de pression

(30) Priorität: 23.02.2007 DE 102007009372
(43) Veröffentlichungstag der Anmeldung: 27.08.2008
(73) Patentinhaber: Silicon Micro Sensors GmbH, 01109 Dresden (DE)
(72) Erfinder: Köhler, Jens, 01561, Thiendorf (DE); Petersen, Lars, 01127, Dresden (DE)
(74) Vertreter: Lippert, Stachow & Partner

(56) Entgegenhaltungen:
- WO-A1-00/29823
- DE-A1-102006 013 414
- DE-C1- 19 547 783
- JP-A- 11 028 666
- JP-A- 2000 021 786
- US-A- 5 747 694
- US-B1- 6 474 169
- US-B2- 7 024 937

## Beschreibung

Es wird ein Drucksensor angegeben, der ein Gehäuse mit einem in das Gehäuse ragenden Druckstutzen umfasst und der mit einem im Gehäuse angeordneten mikromechanischen Druckaufnehmer ausgestattet ist. Der Druckaufnehmer ist derart mit dem Druckstutzen verbunden, dass er einen Durchgang des Druckstutzens verschließt, über die ein Druck direkt auf den Druckaufnehmer einwirkt. Es wird außerdem ein Verfahren zur Herstellung eines solchen Drucksensors angegeben.

Derartige Drucksensoren werden zur Überwachung von Drücken oder Druckänderungen in den verschiedensten Anwendungsbereichen mit sehr unterschiedlichen Druckbereichen eingesetzt. Beispielsweise in Steuerungseinrichtungen für Kolbenmotoren oder bei Kolbenverdichtern bestehen hinsichtlich Druckbeständigkeit, Temperaturbereich und Lebensdauer sehr hohe Anforderungen. Insbesondere muss unter den dort sehr hohen und teils heftigen Druckänderungen und auftretenden Maximaldrücken die Zuverlässigkeit der druckbelasteten Verbindungen, die häufig als Klebeverbindung ausgeführt sind, unter allen Betriebsbedingungen gewährleistet sein.

Ein üblicher Aufbau eines Drucksensors ist beispielsweise in der DE 102 60 105 A1 beschrieben. Die Darstellung dort bezieht sich jedoch nicht auf ein umgebendes Gehäuse. Ein Druckaufnehmer ist, unter Zwischenlage eines Glassockels, mit seiner Membran über dem Durchgang eines Druckstutzens montiert, so dass ein in dem Durchgang des Druckstutzens anliegender und zu messender Druck auf die Membran wirkt. Auf der gegenüberliegenden Seite der Membran, die häufig und auch im Folgenden als Vorderseite des Druckaufnehmers bezeichnet wird, sind Messwiderstände angeordnet, mittels deren Widerstandsänderung der anliegende Druck oder eine Druckänderung zu ermitteln ist. Die Widerstandsänderung resultiert bekanntermaßen aus einer Auslenkung der Membran aus ihrer Ruhelage infolge einer Änderung des anliegenden Drucks und der damit verbundenen Zug- oder Druckbelastung der Membran. Bei der Druckbeaufschlagung wird die Verbindung des Druckaufnehmers auf dem Druckstutzen und gegebenenfalls auch die Verbindungen zwischen zwei anderen der Komponenten Druckaufnehmer, Sockel, Druckstutzen und Gehäuse stark auf Zug belastet. Diese führen insbesondere bei hohen Drücken und Langzeiteinsatz des Drucksensors zu Zuverlässigkeitsproblemen. Vergleichbare Drucksensoren sind auch in der US 7,024,937 B2, der US 5,747,694 A oder der US 6, 474,169 B1 beschrieben. Aus Letzterer ist bekannt, dass bei der Verwendung von Kunststoff-Druckstutzen durch Einfügen einer thermisch auf den Druckaufnehmer abgestimmten Materialkomponente die Druckdichtheit verbessert werden kann. Des Weiteren ist in der JP 2000 021786 A beschrieben, eine Aluminiumelektrode aufzurauen, um die Haftfestigkeit eines darauf aufzubringenden Fluorid-Schutzfilmes eines zu verbessern, oder in der JP 11 028666A, die sich auf die Fertigung von Halbleiterelementen oder LCDs bezieht, dass die Oberfläche von Titan, Edelstahl oder Aluminium mittels Sandstrahlen mit geringerem Strahldruck bearbeitet werden kann, um deren Haftfähigkeit zu verbessern.

Diese Probleme verstärken sich unter der vom Gesetzgeber vorgegebene Verpflichtung zur Verwendung bleifreier Materialien, da es schwer möglich ist, zuverlässige Klebeverbindungen zwischen den bleifreien Komponenten eines Drucksensors, wie sie beispielsweise in der EP 1 785 710 A2 beschrieben sind oder die aus anderen, chemisch und mechanisch höher belastbaren Materialien bestehen, über den gesamten Einsatzbereich hinsichtlich Druck und Temperatur herzustellen.

Der Erfindung liegt daher die Aufgabe zugrunde, einen Drucksensor anzugeben, der unter Verwendung bleifreier Materialien auch bei hohen Drücken und Druckdifferenzen die Anforderungen an die Zuverlässigkeit erfüllt.

Mit dem beschriebenen Drucksensor ist für den Druckstutzen eine bleifreie Aluminiumlegierung verwendbar, welche die hohen mechanischen und auch besonderen chemische Belastungen standhalten, die durch das anliegende flüssige oder gasförmige Medium, wie z.B. verschmutzte Luft, Öl oder Kältemittel, entstehen können. Die Verwendbarkeit bleifreier Materialien, die hohen mechanischen und chemischen Belastungen standhalten ist optional auch für zumindest jene anderen Teile des Gehäuses möglich, die druckbelastet sind. Unter Verwendung dieser Materialien sind die druckbelasteten Verbindungen der einzelnen Komponenten des Drucksensors, insbesondere die Verbindung zwischen dem Druckaufnehmer und dem Druckstutzen mittels Klebeverbindung herstellbar, wobei die Klebeverbindung Druckbelastungen von 40 bar Betriebsdruck und darüber dauerhaft standhält. Des Weiteren erweisen sich die beschriebenen Klebeverbindungen aufgrund der verbesserten Haftungseigenschaften über einen hohen Temperaturbereich und auch bei hohen Temperaturwechselbelastungen stabil. So sind Betriebstemperaturen im Bereich von -40°C bis 135°C und Lagertemperaturen bis zu 150°C ohne Beschädigung der Klebeverbindungen möglich.

Zur Herstellung der erforderlichen Haftfestigkeit der Klebeflächen mit dem Klebematerial weisen zumindest die Bereiche der Oberfläche des Druckstutzens, mit denen eine druckbelastete Klebeverbindung herzustellen ist besondere Oberflächeneigenschaften auf. Diese Bereiche betreffen zunächst die Klebeverbindung zwischen dem Druckstutzen und dem Druckaufnehmer, auf die der anliegende und zu messende Druck direkt wirkt. Sofern der Druckaufnehmer unter Zwischenlegen weiterer Komponenten mit dem Druckstutzen verklebt wird, betrifft das ebenso die Klebeverbindung zwischen dem Druckstutzen und dieser ergänzenden Komponente. Derartige Komponenten können z.B. ein Glas- oder Siliziumsockel sein, der mit der Rückseite des Druckaufnehmers verbunden ist. Sie sind eingefügt, um unter anderem eine Entkopplung zwischen der Membran des Druckaufnehmers und dem Stutzen vorzunehmen. Sofern der thermische Ausdehnungskoeffizient des Sockels ungefähr dem des Druckaufnehmers angepasst ist, vermindert sich der Einfluss des thermischen Ausdehnungsverhaltens des Druckstutzens im Vergleich zu dem des Druckaufnehmers.

Darüber hinaus ist häufig auch die Verbindung zwischen dem Druckstutzen und dem Gehäuse infolge der Druckeinwirkung auf Zug- oder Scherkraft belastet, so dass in einer Ausgestaltung des Drucksensors auch diese Verbindung die charakteristischen Eigenschaften der Oberfläche aufweisen, die denen des Druckstutzens vergleichbar sind. Eine solche Verbindung zwischen Druckstutzen und Gehäuse vermeidet die Verwendung von besonderen Dichtelementen, z.B. Dichtringen, die sich in Bezug auf die thermische und chemische Belastung als problematisch erweisen können.

Die betreffenden Oberflächenbereiche weisen erfindungsgemäß eine definierte Rauheit auf und sind mit einer Haftvermittlerschicht überdeckt, wobei eine Haftvermittlerschicht dadurch charakterisiert ist, dass sie konform ist und damit die Oberflächenstruktur nahezu unverändert abbildet.

Die Herstellung der erforderlichen Rauheit erfolgt mit den bekannten Strahlverfahren unter Verwendung von verschiedenem Strahlgut und unter Einstellung der Einwirkzeit. Mit beiden Parametern sind diffuse Oberflächenstrukturen zu erzeugen, die sich sowohl hinsichtlich ihrer Strukturen als auch in ihren Rauheitskennwerten unterscheiden können. Als diffuse Rauheit wird hier ein Oberflächenprofil ohne regelmäßig wiederkehrende Strukturen bezeichnet, wie sie z.B. nach Zerspanungsverfahren, Prägen einer Textur oder ähnlichem festzustellen ist. Die Eigenschaften der Oberflächenstrukturen sind mittels des Verfahrens oder der Verfahrensparameter den unterschiedlichen mechanischen und chemischen Lastfällen anpassbar. Neben der Rauheit der Oberfläche wird mittels des Strahlverfahrens in Abhängigkeit vom Verfahren selbst und dessen Parameter sowie vom Strahlgut eine Verdichtung der obersten Schichten des behandelten Materials erzielt. Auch dieser Effekt hat einen deutlichen Einfluss auf die Haftfestigkeit der Klebeverbindung und ist über die genannten Variationsmöglichkeiten an die jeweiligen Anforderungen durch Optimierung anzupassen.

Die Oberflächenkennwerte zur Rauheit und Oberflächenverdichtung sind unter anderem entsprechend dem verwendeten Kleber sowie der möglichen Abmessung und Gestalt der jeweiligen Klebefläche im jeweiligen Anwendungsfall zu optimieren. Das Strahlverfahren selbst hängt wiederum von dem Material des zu strahlenden Druckstutzens ab. Z.B. kann bei thermisch belastbaren Materialien wie Metallen das Druckluftstrahlen andernfalls das Strahlen mit in einer Flüssigkeit dispergierten Strahlmittel zum Einsatz kommen. Aufgrund dieser Optimierung der Rauheitskennwerte können bei der Behandlung mehrerer Flächen an einer Komponente diese Flächen auch voneinander abweichende Kennwerte aufweisen.

Die Haftvermittlerschicht ist mit einem geeigneten, vom Material des mit der Haftvermittlerschicht zu versehenden Bauteils abhängenden Verfahren herstellbar. Einfluss auf die Haftung des Klebstoffs auf der zu klebenden Oberfläche haben neben deren Struktur die Molekularkräfte zwischen Klebstoff und Oberfläche sowie die Bindungs- und energetischen Verhältnisse, die sich unter anderem in der Benetzungsfähigkeit der Oberfläche widerspiegeln. Da insbesondere eine energetische Beurteilung einer Oberfläche hinsichtlich ihrer Adhäsionsfähigkeit sehr schwer möglich ist, erfolgt die Herstellung der Haftvermittlerschicht meist durch ein Optimierungsverfahren.

Dem Optimierungsverfahren sind unter anderem das Material der zu klebenden Oberfläche, der Klebstoff sowie die thermischen, chemischen und mechanischen Belastungen der Klebeverbindung zugrunde zu legen. In Abhängigkeit von dem Material sind verschiedene Verfahren zur Herstellung einer Haftvermittlerschicht bekannt. Bei metallischen Oberflächen sind Passivierungsschichten geeignet, wobei über die verschiedenen Parameter des Passivierungsverfahrens, wie z.B. die Verweilzeit des Bauteils im Passivierungsbad, die konforme Passivierungsschicht herstellbar ist. Der Begriff der Konformität einer Schicht beschreibt hier eine homogene Schichtdicke, unabhängig von der horizontalen, vertikalen oder winkligen Ausrichtung und unabhängig von der Gestalt des beschichteten Flächenabschnitts. Des Weiteren sind bei Metallen und ebenso bei Kunststoffen Plasmabehandlungen geeignet, die Bindungseigenschaften einer Oberflächenschicht des Materials so zu verändern, dass die Adhäsion verbessert werden kann. Die Haftvermittlerschicht ist tatsächlich nur im zu verklebenden Bereich erforderlich, kann aber ebenso auf der gesamten Oberfläche der Komponente hergestellt werden.

Die Haftvermittlerschicht kann an verschiedenen Flächenabschnitten einer Komponente voneinander abweichende Eigenschaften aufweisen. Eine einheitliche Haftvermittlerschicht auf dem gesamten Druckstutzen ist alternativ möglich und kostengünstiger herzustellen. Sofern die Haftvermittlerschicht entsprechend einer Ausführungsform durch eine Passivierungsschicht gebildet ist, kann eine vollständige Passivierung des Druckstutzens z.B. bei dessen Verwendung in aggressiver Umgebung erfolgen, so dass die Haftvermittlerschicht in den Bereichen, die nicht vom Klebstoff bedeckt sind als Korrosionsschutz insbesondere gegenüber dem anliegenden Medium dient. Die abschnittsweise oder abschnittsweise unterschiedliche Herstellung der Haftvermittlerschicht ist z.B. mittels geeigneter Maskierungsverfahren möglich.

Eine Klebeverbindung, die mit einer derart strukturierten und behandelten Fläche hergestellt ist, ist aufgrund der verbesserten Haftfestigkeit der zu verbindenden Flächen in der Lage, durch unterschiedliches thermisches Ausdehnungsverhalten bedingten Stress aufzunehmen. Da die Klebeverbindung durch die Oberflächenstruktur des Druckstutzens und die Haftvermittlerschicht verbessert wird, ist es darüber hinaus möglich, in Abhängigkeit von der zu erwartenden thermischen Stressbelastung solchen Kleber einzusetzen, der speziell auf diese Belastung und nicht ausschließlich auf die zu verbindenden Materialien eingestellt ist. Denn die beschriebenen Oberflächeneigenschaften der miteinander zu verklebenden Flächen ermöglichen die Verwendung von bekannten Klebematerialien, die bisher auch für bleihaltige Materialien verwendet wurden und deren Eigenschaften und Verwendung erprobt sind.

Der erfindungsgemäße Drucksensor soll nachfolgend anhand einiger Ausführungsbeispiele näher erläutert werden. Die zugehörige Figur zeigt einen Vertikalschnitt durch einen Drucksensor in schematisierter Darstellung.

Der Drucksensor besteht aus einem Gehäuse 9 und einem Gehäusestecker 1, die miteinander dichtend und lösbar verbunden sind. Im dargestellten Ausführungsbeispiel umschließt das Gehäuse 9 den Gehäusestecker 1 abschnittsweise kraftschlüssig. Die Dichtheit der Verbindung gegenüber Staub und Feuchtigkeit ist mittels eines den Gehäusestecker 1 umschließenden und am Gehäuse 9 anliegenden Dichtringes 11 hergestellt. Gehäuse 9 und Gehäusestecker 1 umschließen einen Hohlraum 17, in welchen ein Druckstutzen 16 ragt. Sowohl Druckstutzen 16 als auch das Gehäuse 9 und der Gehäusestecker 1 bestehen aus einem bleifreien Material. Der Gehäusestecker 1, der nicht dem Druckmedium ausgesetzt ist, besteht aus Kunststoff und die beiden ersteren Bauteile bestehen aus einer bleifreien Aluminiumlegierung. Alternativ sind für den Gehäusestecker auch andere Materialien verwendbar, z.B. Messing, Kunststoff oder Edelstahl, die in vielen Anwendungsfällen eine mechanische und chemische Beständigkeit aufweisen. Auch können beide Bauteile aus voneinander abweichenden Materialien bestehen.

Der Druckstutzen 16 weist einen Durchgang 2 auf, der im Hohlraum 17 mündet und dort mit einem Druckaufnehmer 13 verschlossen ist. Der Druckaufnehmer 13 ist ein mikromechanisches Bauelement und halbleiterbasiert. Im vorliegenden Ausführungsbeispiel handelt es sich um einen piezo-resistiven Silizium-Druckaufnehmer 13, der auf seiner Rückseite einen Glassockel aufweist. Auch der Glassockel hat einen Durchgang. Dieser mündet an der Membran des Druckaufnehmers 13.

Der Druckaufnehmer 13 ist unter Zwischenlage des Glassockels derart auf dem Druckstutzen 16 montiert, dass der Durchgang des Glassockels mit dem Durchgang 2 des Druckstutzens 16 korrespondiert. Somit wirkt ein im Druckstutzen 16 anliegendes Medium auf die Rückseite 19 des Druckaufnehmers 13. Alternativ ist der Drucksensor auch mit einem anderen geeigneten Druckaufnehmer 13 herstellbar oder er kann ohne Glassockel direkt oder mit einem anderen Sockel auf dem Druckstutzen 16 montiert sein.

Die Montage des Druckaufnehmers 13 auf dem Druckstutzen 16 erfolgt durch eine Klebeverbindung. Der Bereich des Druckstutzens 16, in dem die Klebeverbindung zum Druckaufnehmer 13 hergestellt ist, soll im Folgenden als erster Bereich 5 bezeichnet sein. In einer weiteren Ausführungsform des Drucksensors ist der Druckstutzen 16 einem zweiten Bereich 7 über eine weitere Klebeverbindung mit dem Gehäuse 9 verbunden. Alternativ ist diese Verbindung auch mit anderen Mitteln herstellbar, z.B. über geeignete Halteelemente.

Zur Herstellung einer sicheren und haltbaren Klebeverbindung ist einer oder sind beide Bereiche 5, 7 des Druckstutzens 16 mit einer Oberflächenrauheit ausgestattet. Die Oberflächenrauheit ist in einer Ausführungsform des Drucksensors mittels eines Druckstrahlverfahrens erzeugt, bei dem kugelförmiges Strahlgut, z.B. Kugeln aus Glas, Keramik oder ähnlichem verwendet werden. Die so bearbeitete Oberfläche weist eine punktförmige und diffuse Rauheit in den betreffenden Bereichen auf, die keine Spitzen, sondern nur abgerundete Kanten und Peaks umfasst. Durch definierte, im Strahlgut auch unterschiedliche Kugelgrößen sind definierte Rauheitskennwerte einstellbar. Eine solche Struktur zeigt, in Verbindung mit den weiteren nachfolgend beschriebenen Maßnahmen, überraschenderweise sehr gute Ergebnisse in Belastungstests.

Der oder die genannten Bereiche 5, 7 sind des Weiteren mit einer Passivierungsschicht beschichtet, die gleichzeitig als Korrosionsschutz für den Druckstutzen 16 und das Gehäuse 9 dienen. In einer Ausgestaltung der Erfindung umfasst die Passivierungsschicht keine Chrom(VI)-haltigen Bestandteile aufgrund der Verwendung von Chrom(VI)-freiem oder Chrom(III)-haltigem Bad-Material zur Herstellung der Passivierungsschicht. Damit wird den Anforderungen insbesondere in der Elektro- und der Automobilindustrie entsprochen, wonach keine Chrom(VI)-haltigen Verbindungen zu verwenden sind.

Eine Passivierungsschicht mit den oben genannten Eigenschaften wird durch optimierte Prozessparameter wie z.B. Badverweilzeit, Badkonzentration, Badtemperatur oder pH-Wert erzielt. Die Optimierung kann auf die zu verbindenden Materialien und die zu erwartenden Lastfälle und Wechsellasten erfolgen. In Verbindung mit der Oberflächenrauheit gewährleistet die Passivierungsschicht eine zuverlässige Klebeverbindung zwischen Druckstutzen 16 und Druckaufnehmer 13 sowie zwischen Druckstutzen 16 und Gehäuse 9, die selbst bei den genannten hohen Drücken und Temperaturen für Dauerbelastungen geeignet sind, wie sie z.B. im Automotivbereich auftreten.

Auch wenn die Ausführungen hinsichtlich der Oberflächenstruktur und Haftvermittlerschicht nur auf die Bereiche bezogen wurden, welche die in die Klebeverbindung einbezogen sind, ist es selbstverständlich möglich, zur Effektivierung der Herstellungsprozesse das gesamte Bauelemente derart zu bearbeiten, da weder die Oberflächenstruktur noch die Haftvermittlerschicht Einfluss auf die Funktion des Drucksensors haben. Sofern Dichtungen herzustellen sind, bei denen die Oberflächenrauheit Einfluss haben könnte, sind diese entweder durch die Klebeverbindung selbst realisiert, z.B. zwischen Druckstutzen 16 und Gehäuse 9, oder durch geeignete Dichtmaterialien oder abschnittsweises Glätten der Oberfläche mit der erforderlichen Druckdichtheit oder durch eine Kombination von beiden zu erzielen.

Aufgrund der erzielten Verbesserung der Hafteigenschaften der aufgerauten und mit einer Haftvermittlerschicht versehenen Bereiche 5, 7 des Druckstutzens 16 kann in einer weiteren Ausführungsform des Drucksensors, bei geeignetem Gehäusematerial, auch jener Abschnitt des Gehäuses 9 wie oben beschrieben oberflächenmodifiziert sein, welcher der Klebeverbindung dient. Damit tragen beide durch den Kleber miteinander zu verbindenden Flächen zur Verbesserung der Verbindung bei. Für die Eigenschaften und die Herstellung der Modifizierung der Gehäuseoberfläche gelten die oben dargelegten Bedingungen, so dass dazu auf die dortigen Ausführungen verwiesen wird. Sofern das Material des Gehäuses 9 vom Material des Druckstutzens 16 abweicht, können auch die Eigenschaften der betreffenden Oberflächenbereiche und die dafür erforderlichen Verfahren voneinander abweichen.

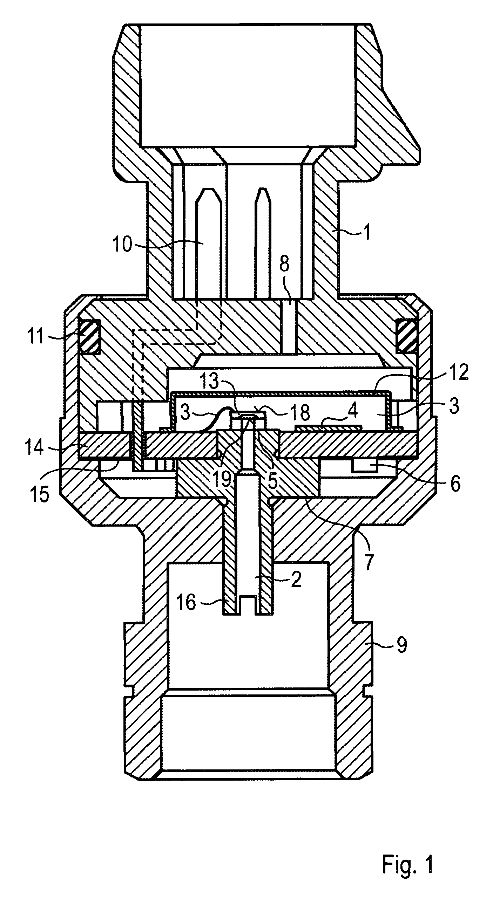

Der in der Figur dargestellte Drucksensor weist des Weiteren einen Schaltungsträger 14 auf, der ebenfalls auf den Druckstutzen 16 geklebt ist. Die Anordnung des Schaltungsträgers 14 auf dem Druckstutzen 16 erfolgt derart, dass eine zuverlässige elektrische Verbindung mittels flexibler Verbinder 3 zwischen den Messwiderständen (nicht dargestellt) des Druckaufnehmers 13 und den Schaltungselementen des Schaltungsträgers 14 herstellbar ist. Zur Signalaufbereitung der von den Messwiderständen abgegriffenen Signale kann in einer Ausführungsform des Drucksensors der Schaltungsträger 14 auf seiner dem Druckaufnehmer 13 zugewandten Seite geeignete integrierte Schaltkreise (IC's) 4 aufweisen. Die Montage des Schaltungsträgers 14 auf dem Druckstutzen 16 positioniert diesen in einer definierten Lage zum Druckaufnehmer 13, wodurch die flexible elektrische Verbindung zwischen beiden mechanisch zu entlasten ist. In alternativen Ausgestaltungen kann der Schaltungsträger 14 auch am Gehäuse 9 oder am Gehäusestecker 1 montiert sein, sofern thermische oder druckbedingte Relativbewegungen zwischen Schaltungsträger 14 und Druckaufnehmer 13 durch die elektrische Verbindung ausgeglichen werden können.

Auf der dem Druckaufnehmer 13 abgewandten Seite kann der Schaltungsträger 14 SMD-Bauelemente aufweisen, die weitere Funktionen des Drucksensors realisieren. Z.B. können diese zur Temperaturmessung im Hohlraum 17 des Drucksensors dienen, um Temperatureffekte auf die Messelektronik abschätzen und kompensieren zu können.

In einer weiteren Ausführungsform ist der Druckaufnehmer 13 und zumindest Teile des Schaltungsträgers 14, auf welchen die IC's 4 montiert sind, einschließlich der flexiblen elektrischen Verbinder 3 zwischen beiden von einer Kappe 12 überdeckt. Diese Kappe 12 kann dichtend auf dem Schaltungsträger 14 oder alternativ auf dem Druckstutzen 16 montiert sein, so dass in der Kappe ein den Druckaufnehmer 13 umgebender definierter Referenzdruck herstellbar ist. Sie kann aber auch lediglich dem mechanischen Schutz des Druckaufnehmers 13 und gegebenenfalls der IC's 4 dienen, so dass in diesem Fall eine einfache Befestigung der Kappe 12 relativ zu den Komponenten genügt. Alternativ kann die Kappe 12 auch druckdicht montiert sein und Druckausgleichsöffnungen aufweisen, so dass in der Kappe 12 wahlweise ein Referenzdruck oder der Umgebungsdruck herstellbar ist. Mit einer solchen oder vergleichbaren Modifikation ist der Drucksensor sowohl als Differenzdrucksensor, als Relativdrucksensor als auch als Absolutdrucksensor verwendbar. Über eine Öffnung 8 im Gehäusestecker 1 und eine offene Druckausgleichsöffnung (nicht dargestellt) in der Kappe 12, liegt auf der Vorderseite 18 des Druckaufnehmers 13 Umgebungsdruck an, so dass ein Relativdruck zwischen dem im Druckstutzen 16 anliegenden Druck und dem Umgebungsdruck messbar ist. Ebenso ist die Öffnungen im Gehäusestecker 1 und der Kappe ein definierter Druck anlegbar, so dass der Differenzdruck gemessen werden kann. Ist hingegen mittels der druckdichten Kappe 12 im Inneren des Drucksensors ein Referenzdruck oder Vakuum eingestellt, ist Absolutdruck messbar.

Zum Schutz vor Umgebungsbedingungen kann der Druckaufnehmer 13 allein oder in Verbindung mit einem IC 4 durch eine Schutzschicht bedeckt sein. Diese Maßnahme ist ergänzend oder alternativ zur Anordnung einer Kappe 12 möglich.

Der Gehäusestecker 1, der den Druckaufnehmer 13 und den Schaltungsträger sowie gegebenenfalls die Kappe 12 überdeckt, besteht in einer Ausführungsform des Drucksensors aus Kunststoff und ist mit außen liegenden eingespritzten Kontakten 10 zur elektrischen Verbindung der elektronischen Bauelemente im Inneren des Drucksensors ausgestattet.

### Bezugszeichenliste

- 1: Gehäusestecker
- 2: Durchgang
- 3: flexible Verbinder
- 4: Integrierter Schaltkreis (IC)
- 5: erster Bereich
- 6: SMD Bauelement
- 7: weiterer oder zweiter Bereich
- 8: Öffnung
- 9: Gehäuse
- 10: elektrische Kontakte
- 11: Dichtring
- 12: Kappe
- 13: Silizium-Druckaufnehmer
- 14: Schaltungsträger
- 15: Lötverbindung
- 16: Druckstutzen
- 17: Hohlraum
- 18: Vorderseite
- 19: Rückseite

## Patentansprüche

1. Drucksensor, bestehend aus einem Gehäuse (9), einem Gehäusestecker (1) und einem in das Gehäuse (9) ragenden Druckstutzen (16) aus einem bleifreien Material, wobei in dem Drucksensor ein Druckaufnehmer (13) angeordnet ist, der auf den Druckstutzen (16) aufgeklebt ist, so dass ein im Druckstutzen (16) befindlicher Durchgang (2) einseitig verschlossen ist, **dadurch gekennzeichnet, dass** der Druckstutzen (16) aus einer bleifreien Aluminiumlegierung besteht und in einem Bereich (5) eine mittels Strahlverfahren aufgerauhte Oberfläche aufweist und mit einer Haftvermittlerschicht versehen ist und dass der Druckaufnehmer (13) in diesem Bereich (5) mit dem Druckstutzen (16) mittels Kleben verbunden ist.

2. Drucksensor nach Anspruch 1, **dadurch gekennzeichnet, dass** der Bereich (5) des Druckstutzens (16) derart aufgeraut ist, dass das Oberflächenprofil abgerundete Kanten und Peaks aufweist.

3. Drucksensor nach einem der vorstehenden Ansprüche, **dadurch gekennzeichnet, dass** der Druckaufnehmer (13) mit einer Glas- oder Silizium-Rückseite versehen ist, die mit dem Druckstutzen (16) mittels Kleben verbunden ist.

4. Drucksensor nach einem der Ansprüche 1 bis 3, **dadurch gekennzeichnet, dass** der Druckstutzen (16) in einem weiteren Bereich (7) mittels Kleben mit dem Gehäuse (9) verbunden ist und der weitere, im Folgenden als zweiter bezeichnete Bereich (7) eine Oberflächenrauheit und Haftvermittlerschicht aufweist.

5. Drucksensor nach einem der vorstehenden Ansprüche, **dadurch gekennzeichnet, dass** das Gehäuse (9) aus einer bleifreien Aluminiumlegierung, aus Messing, aus Kunststoff oder aus Edelstahl besteht.

6. Drucksensor nach Anspruch 5 in Verbindung mit Anspruch 4, **dadurch gekennzeichnet, dass** das Gehäuse (9) im Bereich seiner Klebeverbindung mit dem Druckstutzen (16) eine Oberflächenrauheit und Haftvermittlerschicht aufweist.

7. Drucksensor nach einem der vorstehenden Ansprüche, **dadurch gekennzeichnet, dass** die Haftvermittlerschicht eine Passivierungsschicht ist.

8. Drucksensor nach einem der vorstehenden Ansprüche, **dadurch gekennzeichnet**, das s das Gehäuse (9) mit einer Passivierungsschicht beschichtet ist.

9. Drucksensor nach einem Ansprüche 7 oder 8, **dadurch gekennzeichnet, dass** eine Passivierungsschicht aus einem Material besteht, welches keine Chrom(VI)-haltigen Bestandteile aufweist.

10. Verfahren zur Herstellung eines Drucksensors, indem ein Gehäuse (9), in welches ein Druckstutzen (16) ragt, mit einem Gehäusestecker (1) verbunden wird und ein Druckaufnehmer (13) derart mit dem Druckstutzen (16) verbunden wird, dass ein im Druckstutzen (16) befindlicher Durchgang (2) einseitig verschlossen wird, **dadurch gekennzeichnet, dass** ein
Druckstutzen (16) aus einer bleifreien Aluminiumlegierung verwendet wird, dass dessen Oberfläche in einem den Durchhang (2) umgebenden ersten Bereich (5), auf dem später der Druckaufnehmer (13) montiert wird, mittels Strahlverfahren aufgeraut wird, dass auf der Oberfläche des Druckstutzens (16) eine konforme Haftvermittlerschicht hergestellt wird, die zumindest diesen ersten gestrahlten Bereich (5) überdeckt, und dass der Druckaufnehmer (13) auf den ersten Bereich (5) des Druckstutzens (16) geklebt wird.

11. Verfahren nach Anspruch 10, **dadurch gekennzeichnet, dass** auf dem Druckstutzen (16) in einem weiteren Bereich (7) eine solche Oberflächenrauheit durch ein Strahlverfahren und eine diesen weiteren Bereich (7) überdeckende Haftvermittlerschicht erzeugt wird und dass der Druckstutzen (16) in diesem weiteren, im Folgenden als zweiten bezeichneten Bereich (7) mit dem Gehäuse (9) durch Kleben verbunden wird.

12. Verfahren nach einem der Ansprüche 10 oder 11, **dadurch gekennzeichnet, dass** für das Strahlverfahren kugelförmiges Strahlgut verwendet wird.

13. Verfahren nach einem der Ansprüche 10 bis 12, **dadurch gekennzeichnet, dass** der Druckaufnehmer (13) mit einer Glas- oder Silizium-Rückseite versehen ist und die Verbindung zwischen dem der Glas- oder Silizium-Rückseite und dem Druckstutzen (16) durch Kleben erfolgt.

14. Verfahren nach einem der Ansprüche 10 bis 13, **dadurch gekennzeichnet, dass** ein Gehäuse (9) aus einer bleifreien Aluminiumlegierung, aus Messing, aus Kunststoff oder aus Edelstahl verwendet wird.

15. Verfahren nach einem der Ansprüche 10 bis 14, **dadurch gekennzeichnet, dass** die Haftvermittlerschicht durch Passivierung der Oberfläche hergestellt wird.

16. Verfahren nach einem der Ansprüche 10 bis 15, **dadurch gekennzeichnet, dass** auf der Oberfläche des Gehäuses (9) eine Passivierungsschicht erzeugt wird.

17. Verfahren nach einem der Ansprüche 10 bis 16, **dadurch gekennzeichnet, dass** eine Passivierungsschicht aus einem Chrom(VI)-freien Material erzeugt wird.

## Claims

1. Pressure sensor, consisting of a housing (9), a housing socket (1) and a pressure port (16) which projects into the housing (9) and which is made of a lead-free material, wherein a pressure sensing element (13) is arranged in the pressure sensor and is adhesively bonded onto the pressure port (16), such that a passage (2) located in the pressure port (16) is sealed on one side, **characterized in that** the pressure port (16) consists of a lead-free aluminium alloy and, in a region (5), has a surface roughened by means of a blasting process and is provided with an adhesion promoter layer, and **in that** the pressure sensing element (13) is connected to the pressure port (16) by means of adhesive bonding in said region (5).

2. Pressure sensor according to Claim 1, **characterized in that** the region (5) of the pressure port (16) is roughened in such a manner that the surface profile has rounded off edges and peaks.

3. Pressure sensor according to either of the preceding claims, **characterized in that** the pressure sensing element (13) is provided with a glass or silicon rear side, which is connected to the pressure port (16) by means of adhesive bonding.

4. Pressure sensor according to one of Claims 1 to 3, **characterized in that** the pressure port (16) is connected to the housing (9) by means of adhesive bonding in a further region (7), and the further region (7), referred to hereinafter as the second region, has a surface roughness and an adhesion promoter layer.

5. Pressure sensor according to one of the preceding claims, **characterized in that** the housing (9) consists of a lead-free aluminium alloy, of brass, of plastic or of high-grade steel.

6. Pressure sensor according to Claim 5 in conjunction with Claim 4, **characterized in that** the housing (9) has a surface roughness and an adhesion promoter layer in the region in which it is connected to the pressure port (16) by adhesive bonding.

7. Pressure sensor according to one of the preceding claims, **characterized in that** the adhesion promoter layer is a passivation layer.

8. Pressure sensor according to one of the preceding claims, **characterized in that** the housing (9) is coated with a passivation layer.

9. Pressure sensor according to either of Claims 7 and 8, **characterized in that** a passivation layer consists of a material which does not have any chromium(VI)-containing components.

10. Process for producing a pressure sensor by connecting a housing (9), into which a pressure port (16) projects, to a housing socket (1) and connecting a pressure sensing element (13) to the pressure port (16) in such a manner that a passage (2) located in the pressure port (16) is sealed on one side, **characterized in that** a pressure port (16) made of a lead-free aluminium alloy is used, **in that** the surface thereof is roughened by means of a blasting process in a first region (5) which surrounds the passage (2) and on which the pressure sensing element (13) is later mounted, **in that** a conforming adhesion promoter layer which covers at least said first blasted region (5) is produced on the surface of the pressure port (16), and **in that** the pressure sensing element (13) is adhesively bonded to the first region (5) of the pressure port (16).

11. Process according to Claim 10, **characterized in that** such a surface roughness is produced in a further region (7) on the pressure port (16) by a blasting process, and an adhesion promoter layer which covers said further region (7) is produced, and **in that** the pressure port (16) is connected to the housing (9) by adhesive bonding in said further region (7), referred to hereinafter as the second region.

12. Process according to either of Claims 10 and 11, **characterized in that** spherical blasting material is used for the blasting process.

13. Process according to one of Claims 10 to 12, **characterized in that** the pressure sensing element (13) is provided with a glass or silicon rear side, and the connection between the glass or silicon rear side and the pressure port (16) is made by adhesive bonding.

14. Process according to one of Claims 10 to 13, **characterized in that** a housing (9) made of a lead-free aluminium alloy, of brass, of plastic or of high-grade steel is used.

15. Process according to one of Claims 10 to 14, **characterized in that** the adhesion promoter layer is produced by passivating the surface.

16. Process according to one of Claims 10 to 15, **characterized in that** a passivation layer is produced on the surface of the housing (9).

17. Process according to one of Claims 10 to 16, **characterized in that** a passivation layer made of a chromium(VI)-free material is produced.

## Revendications

1. Sonde de pression, composé d'un boîtier (9), d'une fiche de boîtier (1) et d'un raccord de pression (16) en un matériau sans plomb qui fait saillie dans le boîtier (9), un capteur de pression (13) étant disposé dans la sonde de pression, lequel est collé sur le raccord de pression (16) de manière à ce qu'un passage (2) qui se trouve dans le raccord de pression (16) soit fermé d'un côté, **caractérisée en ce que** le raccord de pression (16) se compose d'un alliage d'aluminium sans plomb et présente dans une zone (5) une surface rendue rugueuse par grenaillage et est muni d'une couche d'agent adhésif et **en ce que** le capteur de pression (13) est assemblée par collage avec le raccord de pression (16) dans cette zone (5).

2. Sonde de pression selon la revendication 1, **caractérisée en ce que** la zone (5) du raccord de pression (16) est rendue rugueuse de telle sorte que le profil de la surface présente des bords arrondis et des crêtes.

3. Sonde de pression selon l'une des revendications précédentes, **caractérisée en ce que** le capteur de pression (13) est muni d'un côté arrière en verre ou en silicium qui est assemblé par collage avec le raccord de pression (16).

4. Sonde de pression selon l'une des revendications 1 à 3, **caractérisée en ce que** le raccord de pression (16) est assemblé par collage avec le boîtier (9) dans une autre zone (7) et l'autre, désignée ci-après deuxième zone (7), présente une rugosité de surface et une couche d'agent adhésif.

5. Sonde de pression selon l'une des revendications précédentes, **caractérisée en ce que** le boîtier (9) se compose d'un alliage d'aluminium sans plomb, de laiton, de matière plastique ou d'acier inoxydable.

6. Sonde de pression selon la revendication 5 en combinaison avec la revendication 4, **caractérisée en ce que** le boîtier (9) présente une rugosité de surface et une couche d'agent adhésif dans la zone de son assemblage collé avec le raccord de pression (16).

7. Sonde de pression selon l'une des revendications précédentes, **caractérisée en ce que** la couche d'agent adhésif est une couche de passivation.

8. Sonde de pression selon l'une des revendications précédentes, **caractérisée en ce que** le boîtier (9) est revêtu d'une couche de passivation.

9. Sonde de pression selon l'une des revendications 7 ou 8, **caractérisée en ce que** la couche de passivation se compose d'un matériau qui ne présente aucun composant contenant du chrome(VI).

10. Procédé de fabrication d'une sonde de pression, en assemblant un boîtier (9), dans lequel fait saillie un raccord de pression (16), est assemblé avec une fiche de boîtier (1), et un capteur de pression (13) est assemblé avec le raccord de pression (16) de telle sorte qu'un passage (2) qui se trouve dans le raccord de pression (16) soit fermé d'un côté, **caractérisé en ce qu'**un raccord de pression (16) en un alliage d'aluminium sans plomb est utilisé, **en ce que** sa surface est rendue rugueuse par grenaillage dans une première zone (5) entourant le passage (2), sur laquelle sera ultérieurement monté le capteur de pression (13), **en ce qu'**une couche d'agent adhésif conforme est réalisée sur la surface du raccord de pression (16), laquelle recouvre au moins cette première zone (5) grenaillée, et **en ce que** le capteur de pression (13) est collé sur la première zone (5) du raccord de pression (16).

11. Procédé selon la revendication 10, **caractérisé en ce qu'**une telle rugosité de surface est produite par grenaillage sur le raccord de pression (16) dans une autre zone (7) ainsi qu'une couche d'agent adhésif recouvrant cette autre zone (7) et **en ce que** le raccord de pression (16) est assemblé par collage avec le boîtier (9) dans cette autre, désignée ci-après deuxième zone (7).

12. Procédé selon l'une des revendications 10 ou 11, **caractérisé en ce qu'**un matériau de grenaillage sphérique est utilisé pour le grenaillage.

13. Procédé selon l'une des revendications 10 à 12, **caractérisé en ce que** le capteur de pression (13) est muni d'un côté arrière en verre ou en silicium et l'assemblage entre le côté arrière en verre ou en silicium et le raccord de pression (16) est réalisé par collage.

14. Procédé selon l'une des revendications 10 à 13, **caractérisé en ce qu'**un boîtier (9) en alliage d'aluminium sans plomb, en laiton, en matière plastique ou en acier inoxydable est utilisé.

15. Procédé selon l'une des revendications 10 à 14, **caractérisé en ce que** la couche d'agent adhésif est réalisée par passivation de la surface.

16. Procédé selon l'une des revendications 10 à 15, **caractérisé en ce qu'**une couche de passivation est produite sur la surface du boîtier (9).

17. Procédé selon l'une des revendications 10 à 16, **caractérisé en ce qu'**une couche de passivation en un matériau exempt de chrome(VI) est produite.
